(19) Europäisches Patentamt
European Patent Office
Office européen des brevets

(11) **EP 3 913 238 B1**

(12) # EUROPEAN PATENT SPECIFICATION

(45) Date of publication and mention
of the grant of the patent:
**02.07.2025 Bulletin 2025/27**

(21) Application number: **20175442.1**

(22) Date of filing: **19.05.2020**

(51) International Patent Classification (IPC):
**F16B 37/12** *(2006.01)* **F16B 25/00** *(2006.01)*

(52) Cooperative Patent Classification (CPC):
**F16B 37/127; F16B 25/0073**

(54) **THREADED SLEEVE FOR ASSEMBLING WITH HEAT INPUT IN A COMPONENT MANUFACTURED BY FDM PROCESS**

GEWINDEHÜLSE ZUR MONTAGE MIT WÄRMEEINTRAG IN EIN NACH DEM FDM-VERFAHREN HERGESTELLTES BAUTEIL

MANCHON FILETÉ POUR ASSEMBLAGE AVEC UNE ENTRÉE DE CHALEUR DANS UN COMPOSANT FABRIQUÉ PAR PROCESSUS FDM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.11.2021 Bulletin 2021/47**

(73) Proprietor: **Technische Universität Berlin
10623 Berlin (DE)**

(72) Inventor: **FÜRST, Thomas
16727 Velten (DE)**

(74) Representative: **Hertin und Partner
Rechts- und Patentanwälte PartG mbB
Kurfürstendamm 63
10707 Berlin (DE)**

(56) References cited:
**EP-A1- 0 109 528      DE-A1- 19 755 985
DE-C1- 19 705 172      JP-A- S 621 525**

**Description**

The invention relates to a threaded sleeve for assembling with heat input in a component manufactured by FDM process. The threaded sleeve comprises a groove along its longitudinal axis. Further, the outwardly facing surface of the threaded sleeve comprises a self-tapping thread which is divided into two sections along the threaded sleeve's longitudinal axis. The first section comprises a constant pitch diameter and the second area comprises a pitch diameter decreasing along its longitudinal axis. The inwardly facing surface of the threaded sleeve comprises a metric thread.

Furthermore, the invention relates to a KIT, a system and a method for assembling with heat input the above-mentioned threaded sleeve in a component manufactured by FDM process

Background of the invention

Numerous solutions have been established on the market for screwing plastics. In particular, self-tapping screws represent the state of the art. The screws have sharp edges that cut a thread themselves when screwed into the plastic.

For example, EP0109528A1 discloses a self-tapping threaded insert featuring a cutting slot that runs in the axial direction, perpendicular to the thread axis. To ensure consistent conditions when screwing into a smooth receiving bore, the position of the outer thread relative to the cutting slot at the inserts end is fixed. This alignment allows the outer thread, cut by a chamfer at the insert's end, to maintain a uniform profile at the slot faces. Additionally, the position of the slot base relative to the axis of the threaded insert is also fixed. There are different versions of cutting edge shape in the art:

   a) The cutting edges are isosceles with an angle of 30°
   b) The cutting edges are isosceles with an angle of 60°
   c) The top and bottom of the cutting edges differ

When assembling the screws, care must be taken not to exceed the defined peripheral speed of the cutting edges when screwing them into plastic, otherwise this will melt the plastic on the resulting contact surfaces. Hence, it is not possible to apply a desired preload force.

The advantage of this screw variant is the quick and inexpensive assembly. No additional components are necessary. A major disadvantage, however, is that the type of screw connection can only be reused to a limited extent. A maximum repeatable screw connection is given as approximately 10.

Using threaded sleeves is a common alternative to the described direct screwing. Threaded sleeves are inserted into the plastic. The inwardly facing surface of the threaded sleeves are provided with a metric thread, so that this type of connection results in a releasable, reusable connection.

There are different types of threaded sleeves:

   a) with knurls
   Knurls are applied to the outwardly facing surface of the threaded sleeve to generate a resistive torque when the threaded sleeve is installed. Depending on the manufacturer, there are different knurling arrangements in the prior art. The threaded sleeve is inserted, for example, by heat embedding. The threaded sleeve is heated by a mandrel and pressed into the plastic with a defined pressure.

   b) with thread
   The outwardly facing surface of the threaded sleeve comprises a coarse thread instead of the knurls. This type of threaded sleeve is inserted into the plastic by screwing. For this purpose, two notches are provided on the top of the sleeve, which allow a screwdriver to be attached

   c) with heels

This type of thread insert is used in injection molding processes. There, the sleeves are already inserted during production and overmolded with, for example, fiber-reinforced plastic.

Furthermore, no explicit solutions are known for screw connection relating components manufactured by Fused Deposition Modeling. Only threaded sleeves are described in the art which are simply screwed into the material. The FDM process is based on melting filaments and laying them on top of each other in layers. This creates anisotropy which means depending on the direction of the filaments, the resulting component has very different strength properties. This has a direct influence on the strength of the screw connection. There is also the risk of screwing a screw connection (e.g. threaded sleeve with external thread or self-tapping screws) into the material, as this can separate the filament layers. This leads to a loss of strength within the screwed area.

Since the FDM process enables a free design of the manufactured components, there is also the option of printing in commercially available metric nuts, so that this creates a screw connection. These screwed connections must be disadvantageously already planned during the construction of the FDM-component and cannot be subsequently incorporated into the component. Moreover, such screwed connections do not have sufficient strength.

Furthermore, DE19705172C1 discloses a device for pressing metal parts into plastic parts. It comprises at least one electromagnetic transducer for heating a metal part to be pressed into a plastic part, a pressing mandrel for pressing the heated metal part into the plastic part, and a holding device at the end of the pressing mandrel facing the plastic part for holding the metal part on the pressing mandrel. The section of the pressing mandrel exposed to the electromagnetic field of the transducer is made entirely or partially of an electrically nonconductive material. While the application of heat is disclosed, the metal parts are merely pressed into the plastic parts. Summary of the invention

In light of the prior art the technical problem underlying the present invention is to provide a threaded sleeve as well as a system and a kit which enables increased strength of screw connections relating components manufactured by FDM process and a method for assembling said threaded sleeve in a component manufactured by FDM to increase the strength of screw connection.

This problem is solved by the features of the independent claims. Preferred embodiments of the present invention are provided by the dependent claims.

The basis of the invention is a threaded sleeve. In contrast to conventional threaded sleeves for plastic, it has the following deviations / innovations described in the document.

In one aspect the invention relates to a kit comprising a threaded sleeve (19) for assembling with heat input in a component manufactured by FDM process (37) and a guide sleeve (25) having a heating coil (27) wherein

- the threaded sleeve (19) has a groove (15) along its longitudinal axis
- an outwardly facing surface of the threaded sleeve (19) comprises a self-tapping thread having cutting edges (17) and an inwardly facing surface of the threaded sleeve (19) comprises a metric thread (21).

In a preferred embodiment the threaded sleeve for assembling with heat input in a component manufactured by FDM process is characterized in that

- the threaded sleeve has a groove along its longitudinal axis and
- an outwardly facing surface of the threaded sleeve comprises a self-tapping thread having cutting edges and an inwardly facing surface of the threaded sleeve comprises a metric thread.

The invention aims to achieve a considerable calculable increase in strength in screwed components manufactured by FDM. Essentially, a screw-in self-tapping threaded sleeve with heat input is screwed into an FDM-printed hole. The heat is preferably generated from a heat source which affects the threaded sleeve. In contrast to plastic, melting is expressly wanted. The filaments are not blown open under the influence of force, instead they cling to the thread geometry. The provision of a groove in the thread is intended to make it possible for the filament to adhere to the threaded sleeve in the viscous state. When screwed in and after removing the heat source, the filament hardens. The filament located in the groove then prevents the sleeve from unscrewing. In the area of the heat affected zone, i.e. directly in the screwing area, all filament webs additionally fused together in this way. This results in an overall firm connection, which adheres to the thread and the body of the sleeve.

In a preferred embodiment the threaded sleeve for assembling with heat input in a component manufactured by FDM process is characterized in that

- the threaded sleeve has a groove along its longitudinal axis and/or an applied surface roughness, preferably waviness, and
- an outwardly facing surface of the threaded sleeve comprises a self-tapping thread having cutting edges and an inwardly facing surface of the threaded sleeve comprises a metric thread.

Fused deposition modeling (FDM) is a 3D printing process that uses a continuous filament of a thermoplastic material and is known from the prior art. Filament is fed from a large coil through a moving, heated printer extruder head, and is deposited on the growing work. A print head is moved under computer control to define the printed shape. Usually the head moves in two dimensions to deposit one horizontal plane, or layer, at a time; the work or the print head is then moved vertically by a small amount to begin a new layer. The speed of the extruder head may also be controlled to stop and start deposition and form an interrupted plane without stringing or dribbling between sections.

This type of 3D printing can be used especially for rapid prototyping. In a preferred embodiment, the FDM process uses plastic which preferably comprise a thermoplastic, a thermosetting and / or an elastomeric material. Thermoplastics are easy to process. Thermosets are preferably particularly stable even at high temperatures and cannot be deformed, especially when exposed to heat. In particular, elastomers have a high convertibility and a higher energy absorption.

In another preferred embodiment, a fiber composite material comprising a fiber reinforcement in a polymer matrix may be printed. A polymer matrix is preferably also referred to as a plastic matrix.

A fiber composite material is known to the person skilled in the art and preferably comprises reinforcing fibers made of fibers, e.g. B. carbon fiber and a polymer or plastic matrix that embeds the fibers. The plastic matrix and / or polymer matrix advantageously means a material which comprises polymers and in which the fibers are embedded. Since the fibers advantageously have a higher stiffness than the matrix, the applied load or force is preferably conducted along the fibers, which preferably increases the overall stability of the fiber composite material.

A fiber is in particular a linear, elongated structure, which consists of a fibrous material and has a fiber shape, the longitudinal shape z. B. smooth or frizzy and the cross-sectional shape is round or angular, for example. Fibers are primarily used to denote thin threads, preferably a few micrometers in diameter. Thicker and / or thinner fibers are also known and can be used. A fiber roving or only roving preferably consists of several fibers and therefore forms a fiber bundle. In technical applications, fiber rovings are often used to increase manageability. Furthermore, fibers can also preferably be present as yarn, in this case fibers of different lengths are in particular twisted or interwoven with one another.

The components manufactured by FDM process may preferably have simple geometries, such as cuboids, plates, cylinders etc. Such components are advantageous to produce quickly without much effort. Furthermore such geometries have high stability properties.

However, it is not excluded that the components also have complex geometries. The advantage of the FDM process is the free choice of the geometric design shapes.

According to the invention, the term "heat input" preferably means that the threaded sleeve is heated externally by a heat source. Since the threaded sleeve is heated, it heats the contacting material of the component manufactured by FDM process. The threaded sleeve therefore transfers the heat into the component so that it changes its material properties. Hence, the component gets melted.

The heat source is preferably a heating element which converts electrical energy into heat through the process of Joule heating. Electric current through the element encounters resistance, resulting in heating of the element. Said heat source is very easy to install and well controllable. However, other heat sources can also be used, for instance fuel source.

The threaded sleeve is preferably made of material from a group consisting of steel (from simple structural steel to stainless steel alloys such as brass and other non-ferrous metal alloys) and non-ferrous metals such as copper, titanium, aluminium etc.

Steel for the production of screws connections is the most commonly used screw material. This screw material is usually provided with a coating to protect against corrosion, the most common protective coating is electro galvanizing. Stainless steel threaded sleeves ensure a long-lasting connection even in outdoor areas. Threaded sleeves made of aluminium, on the other hand, are advantageously lightweight, have a high level of corrosion protection and a high tightening efficiency. Threaded copper sleeves offer a high thermal expansion behavior, which makes them the right fastening element for specific screwing operations. The strong electrical conductivity of copper also predestines it for threaded sleeves, which are necessary for electrical installations.

The groove according to the invention is preferably configured over the entire length (longitudinal axis) of the threaded sleeve and is located in the thread on the outwardly facing surface. The groove width is preferably 1 mm to 20 mm, more preferably 3 mm to 15 mm and in particular 5 to 10 mm. In a further preferred embodiment, the groove may preferably have a groove depth which is preferably 0.01 mm to 3mm, more preferably 0.1 mm to 2 mm and in particular 0.5 to 1 mm. Preferably, the groove may only be provided in the self-tapping thread. The groove advantageously does not influence the stability of the threaded sleeve. The particularly advantageous effect of the aforementioned sleeve is that the filament of the FDM-component is located in the groove after assembling the threaded sleeve to prevent the sleeve from twisting in the solidified state. Especially these preferred groove dimensions lead to such an optimal effect. It is advantageous that a groove can be inserted into the threaded sleeve in a simple manner using a milling process.

Preferably, the groove may only be provided in the self-tapping thread.

In a further preferred embodiment, the groove is not designed over the entire length of the threaded sleeve. The groove can also only be formed in certain areas along the longitudinal axis of the threaded sleeve. This means that not much material has to be advantageously removed in a post-processing procedure. For example, a recess in just one thread path can be sufficient to achieve the advantages according to the invention.

In another preferred embodiment, the self-tapping thread's flanks may preferably have a high roughness. The surface roughness is preferably applied deliberately in a post process. Along the thread flanks, a targeted increase in roughness may preferably possible as an alternative. The melted material may deposit along the flanks accordingly and hardens. This results in an effect that prevents loosening the threaded sleeve. The average roughness value at the thread flanks is preferably from Ra 3.2 to Ra 50. In order to increase the mentioned effect from it is conceivable to design the thread flanks with a waviness.

Waviness refers to uneven surfaces that occur periodically at longer intervals than roughness, which can be defined as a deviation from an ideal surface that occurs repeatedly at relatively longer intervals than depth. Waviness can be caused, amongst other things, by a workpiece not being clamped centrally in the tool. Milling can also result in waviness if the shape or position of the milling cutter is not ideal or the tool/machine is subject to vibrations.

According to the invention, the waviness is deliberately applied to allow wedging between the threaded sleeve and the FDM component.

Generally, a real measuring profile of a surface can be imagined as a summation of uniform periodic profiles (waves). Real profiles consist of several sine waves, each with its own wavelength. One way of measuring waviness is the scattered light method, which involves measurement and statistical evaluation of the reflection of light beams projected onto the surface.

In a further preferred embodiment, the self-tapping thread's flanks may preferably be provided with a contour. Such contour can be designed as knurls or protrusions. The contour enables an even stronger screw connection, as the knurls or protrusions interlock with the component manufactured by FDM process.

In another preferred embodiment, the invention may also have a groove with a certain roughness and/or certain protrusions. The protrusions are preferably applied deliberately in a post process. In a first step of the post process, a longitudinal section (path) of the threaded sleeve is machined away by milling to create a groove. The milling process generates a certain roughness, preferably from Ra 3.2 to Ra 50, in the groove and/or external material is then applied into the groove to create one or more protrusion.

In another preferred embodiment, the threaded sleeve has both a groove and self-tapping thread's flanks with a certain roughness, preferably from Ra 3.2 to Ra 50. The combination of a high roughness and/or waviness and a groove results in a very firm anchoring of the threaded sleeve in the component manufactured by FDM process.

For the purposes of the invention, the metric thread is preferably an iso-metric thread. The ISO metric thread is a worldwide standardized thread with metric dimensions and 60° flank angle. The metric thread inside the threaded sleeve is advantageously designed to enable the reusability of a screw connection. The pitch diameter of the metric thread is preferably constant along the longitudinal axis of the threaded sleeve.

A self-tapping thread is preferably provided on the outwardly facing surface of the threaded sleeve. The aim here is to achieve the largest possible resulting heat zone in order to optimally define the high-strength area. Compared to the knurled threaded sleeves disclosed according to the state of the art, which are inserted into a plastic component affected by heat, the heat zone of the threaded sleeve according to the invention is considerably larger. Additionally, the self-tapping thread also increases the pull-out resistance.

In a further preferred embodiment, the threaded sleeve is characterized in that the self-tapping thread is divided into two sections along the threaded sleeve's longitudinal axis, wherein a first section comprises a constant pitch diameter and a second section comprises a pitch diameter decreasing along its longitudinal axis. Such an arrangement proves advantageous in a simplified insertion of the threaded sleeve into the material. Apart from the insertion, it is advantageously stable. Furthermore, the smaller pitch diameter in the second section can still form a very good heat influence on the component manufactured by FDM process. Because the first section has a constant diameter, the threaded sleeve can be easily guided by an external guide (sleeve) when screwing it into the material.

In a further preferred embodiment the threaded sleeve is characterized in that the self-tapping thread is divided into two sections along the threaded sleeve's longitudinal axis, wherein a first section comprises a constant pitch diameter and a second section comprises a pitch diameter decreasing along its longitudinal axis and wherein the self-tapping thread's maximum pitch diameter is configured at its first section.

The pitch diameter is preferably the middle diameter between the major and minor diameter of threaded sleeve threads (self-tapping thread on the outwardly facing surface; metric thread on the inwardly facing surface). Said pitch diameter is synonymous with flank diameter. The person skilled in the art is familiar with these terms.

In a preferred embodiment, the self-tapping thread's pitch diameter decreases in the second section preferably essentially exponentially, more preferably essentially constantly (linear).

Terms such as essentially, approximately, roughly, ca., etc. preferably describe a tolerance range of less than ± 40%, preferably less than ± 20%, especially preferably less than ± 10%, even more preferably less than ± 5% and especially less than ± 1% and always include the exact value. The term similar describes preferably values which are approximately the same. The term partial describes preferably at least 5%, especially preferably at least 10%, and especially at least 20%, in some cases at least 40%

In a further preferred embodiment, the second section of the threaded sleeve's self-tapping thread also has a constant pitch diameter. In this case, the pitch diameter can be essentially equal or smaller than the pitch diameter of the first threaded sleeve's section. Due to the constant pitch diameters in the first and second section of the threaded sleeve, the described embodiment of the threaded sleeve is simplified to manufacture, in particular the process of applying the thread.

Preferably, the first section is located above the second section in relation to the upright threaded sleeve, both sections being adjacent to each other. Because the upper (first) section has preferably a constant pitch diameter and the pitch diameter of the second section preferably decreases, the threaded sleeve in the lower section acts like a pointed sleeve and allows an advantageous easy insertion into the component manufactured by FDM process.

In a further preferred embodiment, the threaded sleeve is characterized in that the self-tapping thread's maximum pitch diameter is configured at its first section. This results in particularly good stability, as the thread sleeve can be guided into the material and can also be inserted into the material to particular advantage. Surprisingly, the center of gravity located relatively high up in the threaded sleeve has no negative effect on the guidance and insertion of the threaded sleeve.

In a further embodiment the self-tapping thread's maximum pitch diameter is preferred between 1 mm to 50 mm, more preferred 3 mm to 20 mm and particularly preferred 5 mm to 15 mm. These values are particularly suitable for solving the task according to the invention. These thread sizes allow a large heat input into the material and also reduce the need for a fixed screw connection.

In a further preferred embodiment, the threaded sleeve is characterized in that the threaded sleeve comprises ferromagnetic material. The threaded sleeve thus may advantageously stick to a magnetic torque-applying tool. This makes it easier to place the threaded sleeve on the FDM printed component.

Preferably, the first section of the threaded sleeve consists of ferromagnetic material. The torque-applying tool is particularly attached to the first section of the threaded sleeve, so it is sufficient if only this part comprises ferromagnetic material. This also allows a simplified guidance, as shown in the later part of this document.

In a further preferred embodiment, the threaded sleeve is characterized in that the threaded sleeve has several grooves along its longitudinal axis. In a further preferred embodiment, the threaded sleeve preferably comprises 1 - 8 grooves, more preferably 2 - 6 grooves and especially 4 grooves. A large number of grooves results in a particularly strong fastening of the threaded sleeve in the FDM component.

In a further preferred embodiment, the threaded sleeve characterized in that the threaded sleeve comprises an internal hexagon socket or torx socket. This allows the threaded sleeve according to the invention to be inserted into the component manufactured by FDM process by applying standardized torque-applying tool. The threaded sleeve can also comprise other tool sockets such as external hexagon, Slot, Cross, Frearson, Phillips etc. The standardized tools are advantageously easy to obtain and are especially not expensive.

In a further preferred embodiment, the threaded sleeve is characterized the threaded sleeve comprises ferromagnetic material and/or several grooves along its longitudinal axis and/or an internal hexagon socket and/or a torx socket.

In a further preferred embodiment, a Kit comprises a threaded sleeve of the type mentioned and a guide sleeve having heating coils. The preferred kit makes it easier to screw the threaded sleeve into a component manufactured by FDM process, as it is both guided and heated. Heating the threaded sleeve causes the material of the component manufactured by FDM process to melt when the sleeve is screwed in. The guide also allows the threaded sleeve to be inserted straight into the material, resulting in a particularly stable bond.

The guide sleeve is preferably tubular and has an internal and external diameter. Preferably the guide sleeve does not have a thread. The guide sleeve's internal diameter is preferably aligned to the maximum constant pitch diameter of the first range, so that it can guide the threaded sleeve.

The longitudinal expansion of the guide sleeve is essentially greater than the longitudinal expansion of the threaded sleeve. In a preferred embodiment the longitudinal expansion is 1.5 to 3 times as large as the longitudinal expansion of the threaded sleeve, more preferably 2 times as large. Such a size of the guide sleeve makes it possible to reach the threaded sleeve through a frontal opening of the guide sleeve and insert the threaded sleeve into the material in a particularly simple way with a torque-applying tool.

The longitudinal expansion of the guide sleeve is preferably 20 mm to 200 mm, more preferably 60 bis 150mm and in particular 100mm.

In a further preferred embodiment, a system configured for assembling a threaded sleeve of the type mentioned with heat input in a component manufactured by FDM process comprising: a threaded sleeve of the type mentioned; a guide sleeve; a component manufactured using the FDM process is characterized in that

- the inner diameter of the guide sleeve is radially aligned with the self-tapping thread's pitch diameter of the threaded sleeve, so that the threaded sleeve is guided in the guide sleeve
- the guide sleeve is partially surrounded by heat source.

The described preferred embodiment enables precise alignment of the threaded sleeves before and during screwing in. The design is also very well suited for integration into an automated process. Here, either the component manufactured by FDM process can be automatically fed and positioned or the guide sleeve can be moved accordingly over the component. The guide sleeve allows a better controllable and faster heating of the threaded sleeve, because the guide sleeve acts like an almost closed oven, so the applied heat 'cannot escape in all directions.

The guide sleeve is preferably radially aligned with the threaded sleeve so that the threaded sleeve can be guided along the longitudinal axis of the guide sleeve. This means in particular that the internal diameter of the guide sleeve is preferably designed to be slightly larger than the pitch diameter and to provide a clearance fit. The alignment is preferably designed so that the maximum pitch diameter of the threaded sleeve's self-tapping thread (included the cutting edges) is smaller than the internal diameter of the guide sleeve. The guide sleeve and threaded sleeve are aligned in such a way that the self-tapping thread does not cut a thread in the guide sleeve.

The guide sleeve is preferably made of metal, as this has very good heat conductivity and can therefore transfer heat from the heat source into the threaded sleeve.

In a further preferred embodiment, the guide sleeve is preferably made of a material selected from a group consisting of (stainless) steel, cast iron, copper, brass, nickel alloys, titanium alloys, aluminium alloys.

Guiding the threaded sleeve preferably means that the threaded sleeve inside the guide sleeve can be moved in the axial direction of the guide sleeve without the threaded sleeve tilting and being screwed into the component manufactured by FDM process at an unfavourable angle.

The heating source may preferably be placed evenly around the guide sleeve, so that the threaded sleeve may be evenly heated from all sides. Due to the good heat conduction properties of the guide sleeve, it may be sufficient to place the heat source only at a certain point on the guide sleeve so that the heat is still evenly distributed around the threaded sleeve.

In another preferred embodiment the system is characterized in that the component manufactured by FDM process has a core hole, wherein the guide sleeve rests radially aligned over the core hole. Due to the core hole, the threaded sleeve can be inserted in a very simple way. On the one hand, the core hole acts as an additional fixation and/or guide for the threaded sleeve, so that the threaded sleeve can be inserted exactly at a predefined position. On the other hand, there is no need to apply a large torque to screw the threaded sleeve into the component manufactured by FDM process, as the core hole has less material which acts as a resistance. The core hole has no big impact on the stability of the component manufactured by the FDM process.

Preferably, the core hole can be printed directly during the FDM process. In this case no further machining process such as drilling is required.

In another preferred embodiment, the core hole can be subsequently inserted into the material by a drilling process, which makes it advantageously more precise.

The core hole preferably has a smaller diameter than the maximum pitch diameter of the self-tapping thread of the threaded sleeve. The core hole is particularly preferred to have a smaller diameter than the first section of the threaded sleeve and a larger diameter than the minimum pitch diameter of the threaded sleeve in the second section. This allows the second section of the threaded sleeve to be inserted into the core hole without resistance, so that the core hole can serve as a guide.

In another preferred embodiment the system is characterized in that the guide sleeve has a closure and an insulation layer, wherein the closure is displaceable in one degree of freedom through a laterally arranged guide sleeve opening and wherein the insulation layer divides the guide sleeve along its longitudinal axis in an area arranged above the insulation layer and an area located below the insulation layer wherein the closure is located in the area above the insulation layer. The closure and the insulation layer allow the threaded sleeve to be heated without the component manufactured by FDM process being negatively affected by the heat. This is because the closure positions the threaded sleeve at a distance from the component manufactured by FDM process where it is heaten by the heat source. The insulation layer also ensures that little or no heat reaches the FDM-component via the guide sleeve due to heat conduction.

The lateral opening in the guide sleeve guides the closure in one degree of freedom. The lateral opening is preferably 20 mm to 200 mm, more preferably 60 to 150 mm and especially 100 mm from the lower end of the guide sleeve. These positions ensure that the threaded sleeve is heated far enough away from the FDM-component so that the heat does not adversely affect the component.

The insertion of threaded sleeves may preferably be automated very well. By controlling the closure, the position of the threaded sleeve can be clearly defined. Further, the time at which a new threaded sleeve can be inserted can be determined.

The closure may preferably be a plate that is perpendicular to the longitudinal axis of the guide sleeve. The closure can be set to an open or closed position. If the closure is in a closed position, the heat is advantageously reduced in an area behind the closure. In addition, the threaded sleeve is placed on the closure so that it can be heated.

The closure may preferably be attached above the insulation layer. This ensures that the threaded sleeve heats up when it rests on the closure and that the area located below the closure and/or the insulation layer does not experience a large amount of heat.

In another preferred embodiment, the closure may be designed to be moved manually from an open position to a closed position or automatically by means of an electric or hydraulic drive.

The insulation layer is preferably embedded in the guide sleeve. In a preferred embodiment, the insulation layer is made of a material which preferably absorbs heat very well and can therefore divide the guide sleeve into two different temperature ranges. In another preferred embodiment, the insulation layer is designed as a ring and connects two tubular parts with each other, so that it results in a guide sleeve.

In a further preferred embodiment, the insulation layer may be a high temperature insulation which is very heat resistant and has a long-life expectancy. Such high temperature insulation may preferably consist of high temperature plastics. Their material properties are particularly preferred. In addition to their good insulating properties in terms of heat, they also exhibit high mechanical strength and low moisture absorption. Furthermore, high-temperature plastics are advantageous, particularly easy and inexpensive to produce. High-temperature plastics are selected from a group consisting of polyetheretherketone (PEEK); polyetherimide (PEI) polyethersulfone (PES); liquid crystal polymer (LCP).

The insulating layer can also be made of ceramics, which do not have a high heat conductivity. Ceramics have the following advantageous properties: High resistance to wear, heat, pressure and chemical influences of gases and liquids; Very good electrical insulation.

In another preferred embodiment, the guide sleeve may consist of two materials. For example, the area above the insulation layer may have a different material than the area below insulation layer. It is therefore advantageous that the material of the area above the insulation layer may preferably have a particularly high heat conductivity, so that the threaded sleeve can be heated very quickly. The material below the insulation layer, on the other hand, may preferably have a low heat conductivity so that the heat cannot spread well there and does not negatively affect the FDM component.

In a further preferred embodiment, the insulation layer and/or the area below insulation layer are cooled by an external cooling system. The insulation layer and/or the area below insulation layer of the guide sleeve can have cooling channels through which a cooling medium flows and the heat is removed from the guide sleeve by means of a cooling circuit.

In a further preferred embodiment, the external cooling system can be installed outside the guide sleeve. For example, it can be a fan or a device with a cooling medium, which cools the guide sleeve by heat exchange without being in contact with guide sleeve. An (active) external cooling enables faster, controllable and adjustable cooling of the threaded sleeve.

In another preferred embodiment the system is characterized in that the heat source is a coil placed around the guide sleeve and only the area arranged above the insulation layer is surrounded by the coil. As a result, the area above the insulation layer in particular is heated uniformly, which leads to the threaded sleeve being heated without melting or negatively affect the material of the FDM component

Preferably heating coils are windings of resistance wire. Such a heat source can be regulated advantageously very well and precisely.

In a further preferred embodiment the system is characterized in that the guide sleeve is set up to receive the threaded sleeve in an opening arranged in the upper area, to heat it and to move the closure into an open position after reaching a target temperature, as a result of which the threaded sleeve is guided into the area located below the insulation layer and can be screwed into the component manufactured using the FDM process by means of a torque-applying tool.

The torque-applying tool may preferably consist of a heatable mandrel. This may have two functions: guiding the sleeve when fitting and screwing the threaded sleeve in the component manufactured by FDM process and heating the threaded sleeve to the desired temperature range.

The process may preferably be monitored by sensors for a homogeneous temperature distribution and adjusted depending on the material and the size of the threaded sleeve. Since the torque-applying tool may preferably be universally applicable, the mandrel should be interchangeable

When screwing in the sleeve, the screwing torque may preferably be monitored by sensors. From this, it can be directly derived to what extent the filament has melted due to the heat input. Furthermore, an increase in torque is to be expected as soon as the threaded sleeve is fully screwed into the component manufactured by FDM process. This signal provided by the sensor determines the end of the screwing process.

If the threaded sleeve is automatically placed on the component manufactured by FDM process, the resulting compressive force may preferably be measured. This may preferably be used to determine the condition of the filament at which the melting begins and the optimal starting time for screwing in is obtained.

A sensor for monitoring and regulating the rotation speed may preferably ensure that the screwing takes place under constant conditions. Thus, the rotation speed may preferably be converted into the peripheral speed depending on the pitch diameter of the threaded sleeve's self-tapping thread. It may preferably be used a slow screw-in rotation speed to evenly heat the filament.

In a further preferred embodiment, the system is characterized in that the torque-applying tool has a sensor which is set up to monitor a parameter selected from a group consisting of temperature, heat input, torque, pressure, feed speed and/or rotation speed. This advantageously ensures optimal and repeatable screwing in.

The person skilled in the art knows how to adapt all the advantages according to the invention to the threaded sleeve and to the system and the kit as well as the method described below.

In a further preferred embodiment a method for assembling a threaded sleeve of the type mentioned with heat input in a component manufactured by FDM process, preferably with a system of the type mentioned is characterized in that

 a) the threaded sleeve is heated to a target temperature

 b) the threaded sleeve is screwed into a component manufactured by FDM process using a torque-applying tool, wherein the threaded sleeve is guided.

In a preferred embodiment, the target temperature is between 100 °C and 260 °C, preferably between 150 °C and 220 °C and especially preferred at 200 °C. The person skilled in the art is aware that all °C between these values are also meant. For example, the target temperature can also be at 187°C or 167.848°C or 220.5489999 C etc. These mentioned temperatures above have proved to be particularly effective and useful for the present inventions. The temperatures depend on the filament and are preferably just below the melting temperature of the filament.

Torque-applying tools are preferably used to apply a set torque to a fastener. When used, Torque applying tools in the art may preferably slip, break or click to signal to the operator when the set torque is reached.

In a further preferred embodiment the method is characterized in that

- step a) is preceded by:

    a1) a guide sleeve is aligned on a component manufactured by FDM process
    a2) the threaded sleeve is inserted into the guide sleeve
    a3) the threaded sleeve is guided on a closure present within the guide sleeve

- the following steps are between steps a) and b):

    b1) the closure is moved into an open position
    b2) the threaded sleeve is guided into a second area of the guide sleeve
    b3) the torque-applying tool is inserted through an upper opening of the guide sleeve and rests on the threaded sleeve.

The guide sleeve may preferably be aligned on the FDM component in such a way that it preferably lies radially over the core hole, so that the second section (with smaller pitch diameter of the self-tapping thread) of threaded sleeve can be easily inserted into the hole.

The threaded sleeve is preferably inserted via the frontal opening of the upper part of the guide sleeve and guided onto the closure. The inner diameter of the guide sleeve is preferably matched to the maximum pitch diameter of the threaded sleeve's self-tapping thread so that the threaded sleeve is always aligned correctly.

When the closure is in its open position, the threaded sleeve is preferably guided into the area below the insulation layer. Since the threaded sleeve can preferably be made of ferromagnetic material, it can be guided slowly onto the FDM component (by a magnet mounted outside the guide sleeve). This is particularly advantageous in preventing the threaded sleeve from hitting the component manufactured by FDM process hard.

In another preferred embodiment the method is characterized in that the torque-applying tool has a sensor which is set up to monitor a parameter selected from a group consisting of temperature, heat input, torque, pressure, feed speed and/or rotation speed.

In another preferred embodiment the method is characterized in that the torque-applying tool, taking into account the monitored parameter, screws the threaded sleeve into the component manufactured by FDM process. Thus, an optimal process can be controlled and regulated. This process is advantageously repeatable and comparable with subsequent and previously performed processes.

In another preferred embodiment the invention is related to a use of a kit for assembling a threaded sleeve with heat input into a component manufactured by FDM process, wherein the threaded sleeve comprises an outwardly facing surface with a self-tapping thread having cutting edges and an inwardly facing surface with a metric thread.

Brief description of the figures

**Figure 1**     schematic illustration of a preferred threaded sleeve

**Figure 2**     illustration of a preferred threaded sleeve while assembling with heat input in a component manufactured by FDM process

**Figure 3**     illustration of preferred a method and a preferred system for assembling a preferred threaded sleeve with heat input in a component manufactured by FDM process

Detailed description of the figures

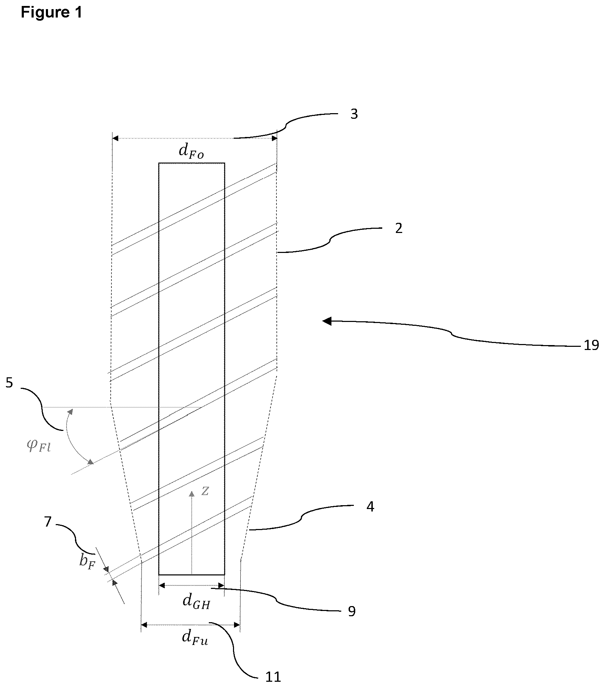

Figure 1 shows a preferred embodiment of the threaded sleeve **19**. In particular, the threaded sleeve **19** has preferably two sections **2, 4** on the outwardly facing surface. The entire outwardly facing surface is preferably equipped with a self-tapping thread. The first section **2** is located directly above the second section **4**. Further, the first section **2** has preferably a constant pitch diameter **3**. This pitch diameter **3** is preferably the maximum pitch diameter of the threaded sleeve's self-tapping thread. The second (lower) section **4** is preferably designed in such a way that the pitch diameter decreases along the longitudinal axis. Hence, the lower section **4** acts like a pointed sleeve and comprises a smallest pitch diameter **11**. The inner diameter **9** of the threaded sleeve **19** is preferably constant and a metric thread **21** comprising a constant pitch diameter. The angle of inclination **5** of the self-tapping thread, however, is preferably constant over the entire threaded sleeve **19**. The flank width **7** of the self-tapping thread is preferably also uniform and consistent over the entire threaded sleeve **19**.

The following conditions should preferably apply to the pitch diameter:

$$(1) \ d_{FU} \leq d_{FO}$$

$$(2) \ d_{FU} > d_{GH}$$

The pitch diameter may preferably be variable or constant depending on the height of the threaded sleeve (z). The upper pitch diameters **3** may preferably be constant in order to ensure alignment in the guide sleeve **25** and thus guarantee vertical screwing in.

The preferred assembling method may preferably be adapted to the angle of inclination **5** of the thread flanks. It is important that no melted material is pressed out of the core hole **35** during screwing in, but that the sleeve is screwed into the softened material at a coordinated rotation speed and feed speed. The thread flank width **7** may preferably be selected so that an optimum temperature distribution is achieved when screwing into the material surrounding the core hole **35**.

The following specifications may preferably be conceivable for the thread flank width **7** and geometry:

> i. The thread flank width **7** may preferably be constant, the roughness results from the manufacturing process. Here, the application of 1-4 grooves in the direction z, as described in the document above, must be taken into account to prevent loosening.
> ii. Along the thread flanks, a targeted increase in roughness may preferably be possible as an alternative. The melted material then may deposit along the flanks accordingly and hardens. This results in an effect that prevents loosening.
> iii. In order to increase the effect from ii., it is conceivable to design the thread flanks with a waviness.

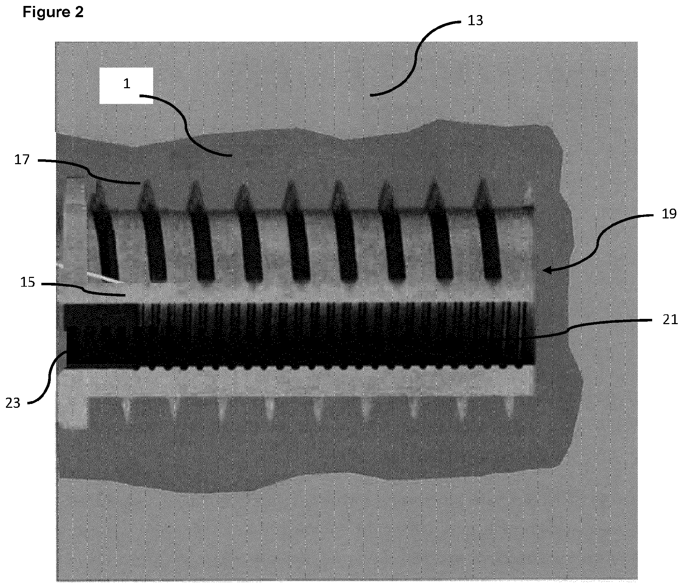

Figure 2 shows a preferred threaded sleeve **19** preferably inserted into a component manufactured by FDM process **37**. The component **37** is preferably divided into two zones - heat affected zone **1** and unmelted filament **13**. The threaded sleeve **19** is preferably inserted into the component's **37** material using the self-tapping thread and cutting edges **17,** which causes the heat input zone 1 to melt and change its properties. The molten material is then introduced into the groove **15** of the threaded sleeve **19** and fixes the threaded sleeve **19** in a firm connection. A larger number of grooves **15** can result in a stronger connection. In this preferred embodiment, both sections **2,** 4 of the threaded sleeve **19** have a constant, equal pitch diameter relating the self-tapping thread. In addition, the first section includes a hexagon socket **23,** which allows the threaded sleeve **19** to be screwed into the component **37** using conventional torque setting tools.

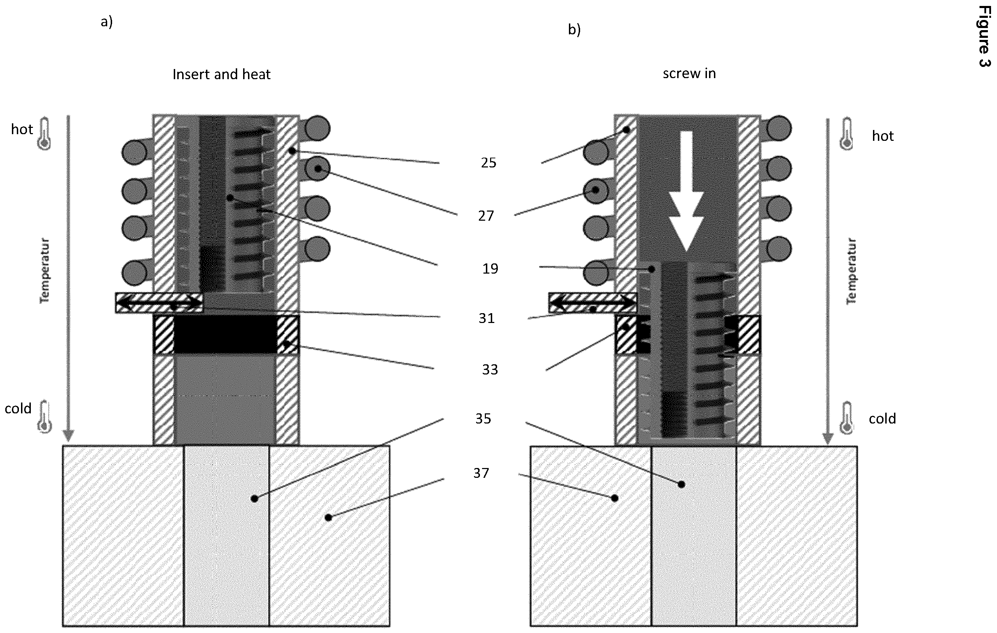

Figure 3 shows a preferred method and a preferred system for inserting a preferred threaded sleeve **19** into a component manufactured by FDM process under heat input. There are two points in time ( a) and b) ) shown in the figure. Time a), which precedes time b), indicates that the threaded sleeve **19** is preferably inserted into a guide sleeve **25.** The inner diameter of the guide sleeve **25** is preferably matched to the maximum pitch diameter **3** of the threaded sleeve's self-tapping thread so that the threaded sleeve **19** is always aligned correctly. The upper part of the guide sleeve **25** is preferably surrounded by a heating coil **27** or other suitable heat source. This makes it possible to introduce heat preferably via the guide sleeve **25** onto the threaded sleeve **19** or directly onto the cutting edges **17** of the self-tapping thread. Inefficient heating of the threaded sleeve **19** from the inside to the outside is thus eliminated.

The guide sleeve **25** is preferably additionally equipped with a closure **31,** which can be moved from a closed position in an open position. At time a), the guide sleeve **25** is locked by the closure. The preferred inserted threaded sleeve **19** falls preferably onto the closure and is held in the heated area of the guide sleeve **25**. When the desired teagret temperature is reached on the thread flanks, the closure is displaced, and the threaded sleeve may preferably be guided onto the corresponding core hole **35** and can be screwed into the component manufactured by FDM process **37** by applying the desired screw-in torque.

Below the closure **31,** there is preferably located an insulation layer **33** separating the guide sleeve's heated and unheated areas. This results in a temperature gradient along the guide sleeve **25**. The lower part, especially the part that is placed on the component **37,** should reach relatively cold temperature so that melting by is avoided. If necessary, active cooling can be provided at a suitable point (not shown in the figure).

List of indications

| | |
|---|---|
| 1 | heat-affected zone |
| 2 | first threaded sleeve's section |
| 3 | pitch diameter of first section |
| 4 | second threaded sleeve's section |
| 5 | angle of inclination of the self-tapping thread |
| 7 | flank width |
| 9 | threaded sleeve diameter |
| 11 | smallest pitch diameter in second section |
| 13 | unmelted filament |
| 15 | groove |
| 17 | cutting edge |
| 19 | threaded sleeve |
| 21 | internal metric thread |
| 23 | Internal hexagon socket |
| 25 | guide sleeve |
| 27 | heating coil |
| 29 | threaded sleeve |
| 31 | Closure |
| 33 | Insulation layer |
| 35 | core hole |
| 37 | component manufactured by FDM process |

**Claims**

1. Kit comprising a threaded sleeve (19) for assembling with heat input in a component manufactured by FDM process (37) and a guide sleeve (25) having a heating coil (27) wherein

> - the threaded sleeve (19) has a groove (15) along its longitudinal axis
> - an outwardly facing surface of the threaded sleeve (19) comprises a self-tapping thread having cutting edges (17) and an inwardly facing surface of the threaded sleeve (19) comprises a metric thread (21).

2. Kit according to claim 1
**characterized in that**

the self-tapping thread is divided into two sections (2, 4) along the threaded sleeve's longitudinal axis,
wherein a first section (2) comprises a constant pitch diameter (3) and a second section comprises a pitch diameter decreasing along its longitudinal axis and wherein the self-tapping thread's maximum pitch diameter (3) is configured at its first section (2).

3. Kit according to claim 1 - 2
**characterized in that**
the threaded sleeve (19) comprises ferromagnetic material and/or several grooves (15) along its longitudinal axis and/or an internal hexagon socket (23) and/or a torx socket.

4. A system configured for assembling a threaded sleeve (19) with heat input in a component manufactured by FDM (37) process comprising:

- a kit according to any one of claims 1 - 3
- a component manufactured using the FDM process (37)
**characterized in that**
- the inner diameter of the guide sleeve (25) is radially aligned with the self-tapping thread's pitch diameter (3) of the threaded sleeve (19), so that the threaded sleeve (19) is guided in the guide sleeve (25)
- the guide sleeve (25) is partially surrounded by a heat source.

5. System according to claim 4
**characterized in that**
the component manufactured by the FDM process (37) has a core hole (35), wherein the guide sleeve (25) rests radially aligned over the core hole (35).

6. System according to claim 4 and/or 5
**characterized in that**

the guide sleeve (19) has a closure (31) and an insulation layer (33),
wherein the closure (31) is displaceable in one degree of freedom through a laterally arranged guide sleeve (25) opening and
wherein the insulation layer (33) divides the guide sleeve (25) along its longitudinal axis in an area arranged above the insulation layer (33) and an area located below the insulation layer (33)
wherein the closure (31) is located in the area above the insulation layer (33).

7. System according to any one of the claims 4 - 6
**characterized in that**
the heat source is a coil (27) placed around the guide sleeve (25) and only the area arranged above the insulation layer (33) is surrounded by the coil (27).

8. System according to any one of claims 4 - 7,
**characterized in that**
the guide sleeve (25) is set up to receive the threaded sleeve (19) in an opening arranged in the upper area, to heat it and to move the closure (31) into an open position after reaching a target temperature, as a result of which the threaded sleeve (19) is guided into the area located below the insulation layer (33) and can be screwed into the component manufactured using the FDM (37) process by means of a torque-applying tool.

9. System according to any one of claims 4 - 8,
**characterized in that**
the torque-applying tool has a sensor which is set up to monitor a parameter selected from a group consisting of temperature, heat input, torque, pressure, feed speed and/or rotation speed.

10. A method for assembling a threaded sleeve (19) with heat input in a component manufactured by FDM process (37), with a system according to claims 4 to 9
**characterized in that**

a) the threaded sleeve (19) is heated to a target temperature
b) the threaded sleeve (19) is screwed into a component manufactured by FDM (37) process using a torque-applying tool, wherein the threaded sleeve (19) is guided.

11. Method according to claim 10
**characterized in that**

- step a) is preceded by:

a1) a guide sleeve (25) is aligned on a component manufactured by FDM process (37)
a2) the threaded sleeve (19) is inserted into the guide sleeve (25)
a3) the threaded sleeve (19) is guided on a closure (31) present within the guide sleeve (19)

- the following steps are between steps a) and b):

b1) the closure (31) is moved into an open position

b2) the threaded sleeve (19) is guided into a second area of the guide sleeve (25)

b3) the torque-applying tool is inserted through an upper opening of the guide sleeve (25) and rests on the threaded sleeve (19).

12. Method according to claim 10 - 11
**characterized in that**
the torque-applying tool has a sensor which is set up to monitor a parameter selected from a group consisting of temperature, heat input, torque, pressure, feed speed and/or rotation speed.

13. Method according to any one of claims 10 - 12,
**characterized in that**
the torque-applying tool, taking into account the monitored parameter, screws the threaded sleeve (19) into the component manufactured by FDM process (37).

14. Use of a kit according to any one of claims 1 - 3 for assembling a threaded sleeve (19) with heat input into a component manufactured by FDM process (37), wherein the threaded sleeve (19) comprises an outwardly facing surface with a self-tapping thread having cutting edges (17) and an inwardly facing surface with a metric thread (21).

**Patentansprüche**

1. Bausatz umfassend eine Gewindehülse (19) zum Zusammenbau mit Wärmezufuhr in einem durch FDM-Verfahren hergestellten Bauteil (37) und eine Führungshülse (25) mit einer Heizwendel (27), wobei

- die Gewindehülse (19) eine Nut (15) entlang ihrer Längsachse aufweist
- eine nach außen zeigende Fläche der Gewindehülse (19) ein selbstschneidendes Gewinde mit Schneidkanten (17) aufweist und eine nach innen zeigende Fläche der Gewindehülse (19) ein metrisches Gewinde (21) aufweist.

2. Bausatz nach Anspruch 1
**dadurch gekennzeichnet, dass**
das selbstschneidende Gewinde entlang der Längsachse der Gewindehülse in zwei Abschnitte (2, 4) unterteilt ist, wobei ein erster Abschnitt (2) einen konstanten Flankendurchmesser (3) und ein zweiter Abschnitt einen entlang seiner Längsachse abnehmenden Flankendurchmesser aufweist und wobei der maximale Flankendurchmesser (3) des selbstschneidenden Gewindes an seinem ersten Abschnitt (2) ausgebildet ist.

3. Bausatz nach Anspruch 1 - 2
**dadurch gekennzeichnet, dass**
die Gewindehülse (19) ferromagnetisches Material und/oder mehrere Nuten (15) entlang ihrer Längsachse und/oder einen Innensechskant (23) und/oder einen Torx-Innensechskant umfasst.

4. Ein System, das für die Montage einer Gewindehülse (19) mit Wärmezufuhr in einem durch FDM-Verfahren (37) hergestellten Bauteil konfiguriert ist, umfassend:

- einen Bausatz gemäß einem der Ansprüche 1 bis 3
- ein Bauteil, das unter Verwendung des FDM-Verfahrens (37) hergestellt ist,
**dadurch gekennzeichnet, dass**
- der Innendurchmesser der Führungshülse (25) radial mit dem Steigungsdurchmesser (3) des selbstschneidenden Gewindes der Gewindehülse (19) ausgerichtet ist, so dass die Gewindehülse (19) in der Führungshülse (25) geführt wird
- die Führungshülse (25) teilweise von einer Wärmequelle umgeben ist.

5. System nach Anspruch 4
**dadurch gekennzeichnet, dass**
das im FDM-Verfahren hergestellte Bauteil (37) eine Kernbohrung (35) aufweist, wobei die Führungshülse (25) radial ausgerichtet über der Kernbohrung (35) aufliegt.

6. System nach Anspruch 4 und/oder 5
**dadurch gekennzeichnet, dass**
die Führungshülse (19) einen Verschluss (31) und eine Isolationsschicht (33) aufweist, wobei der Verschluss (31) in einem Freiheitsgrad durch eine seitlich angeordnete Öffnung der Führungshülse (25) verschiebbar ist und wobei die Isolationsschicht (33) die Führungshülse (25) entlang ihrer Längsachse in einen Bereich, der über der Isolationsschicht (33) angeordnet ist, und einen Bereich, der unter der Isolationsschicht (33) angeordnet ist, unterteilt, wobei sich der Verschluss (31) in dem Bereich über der Isolationsschicht (33) befindet.

7. System gemäß einem der Ansprüche 4 bis 6
**dadurch gekennzeichnet, dass**
die Wärmequelle eine Spule (27) ist, die um die Führungshülse (25) herum angeordnet ist, und nur der oberhalb der Isolationsschicht (33) angeordnete Bereich von der Spule (27) umgeben ist.

8. System nach einem der Ansprüche 4 bis 7,
**dadurch gekennzeichnet, dass**
die Führungshülse (25) eingerichtet ist, die Gewindehülse (19) in einer im oberen Bereich angeordneten Öffnung aufzunehmen, zu erwärmen und den Verschluss (31) nach Erreichen einer Zieltemperatur in eine Offenstellung zu bewegen, wodurch die Gewindehülse (19) in den unterhalb der Isolationsschicht (33) befindlichen Bereich geführt wird und mittels eines Drehmomentaufbringungswerkzeugs in das im FDM-Verfahren (37) hergestellte Bauteil einschraubbar ist.

9. System nach einem der Ansprüche 4 - 8, **dadurch gekennzeichnet, dass** das Drehmomentwerkzeug einen Sensor aufweist, der eingerichtet ist, einen Parameter zu überwachen, der aus einer Gruppe ausgewählt ist, die aus Temperatur, Wärmeeintrag, Drehmoment, Druck, Vorschubgeschwindigkeit und/oder Rotationsgeschwindigkeit besteht.

10. Verfahren zum Montieren einer Gewindehülse (19) mit Wärmeeintrag in ein durch FDM-Verfahren (37) hergestelltes Bauteil, S. 3, mit einem System nach den Ansprüchen 4 bis 9, **dadurch gekennzeichnet, dass**

a) die Gewindehülse (19) auf eine Zieltemperatur erwärmt wird
b) die Gewindehülse (19) in ein mittels FDM-Verfahren (37) hergestelltes Bauteil unter Verwendung eines Drehmomentaufbringungswerkzeugs eingeschraubt wird, wobei die Gewindehülse (19) geführt wird.

11. Verfahren nach Anspruch 10 **dadurch gekennzeichnet, dass**

- dem Schritt a) vorausgeht:

a1) eine Führungshülse (25) an einem mittels FDM-Verfahren hergestellten Bauteil (37) ausgerichtet wird
a2) die Gewindehülse (19) in die Führungshülse (25) eingesetzt wird
a3) die Gewindehülse (19) an einem innerhalb der Führungshülse (19) vorhandenen Verschluss (31) geführt wird

- zwischen den Schritten a) und b) folgende Schritte liegen:

b1) der Verschluss (31) wird in eine offene Position bewegt
b2) die Gewindehülse (19) wird in einen zweiten Bereich der Führungshülse (25) geführt
b3) das Drehmomentwerkzeug wird durch eine obere Öffnung der Führungshülse (25) eingeführt und liegt auf der Gewindehülse (19) auf.

12. Verfahren nach Anspruch 10 - 11 **dadurch gekennzeichnet, dass** das Drehmoment aufbringende Werkzeug einen Sensor aufweist, der eingerichtet ist, einen Parameter zu überwachen, der aus einer Gruppe ausgewählt ist, die aus Temperatur, Wärmeeintrag, Drehmoment, Druck, Vorschubgeschwindigkeit und/oder Rotationsgeschwindigkeit besteht.

13. Verfahren nach einem der Ansprüche 10 bis 12, **dadurch gekennzeichnet, dass** das Drehmoment aufbringende Werkzeug unter Berücksichtigung des überwachten Parameters die Gewindehülse (19) in das durch FDM-Verfahren hergestellte Bauteil (37) einschraubt.

14. Verwendung eines Bausatzes gemäß einem der Ansprüche 1 bis 3 zum Montieren einer Gewindehülse (19) mit Wärmeeintrag in ein durch FDM-Verfahren hergestelltes Bauteil (37), wobei die Gewindehülse (19) eine nach außen weisende Fläche mit einem selbstschneidenden Gewinde mit Schneidkanten (17) und eine nach innen weisende Fläche mit einem metrischen Gewinde (21) aufweist.

**Revendications**

1. Kit comprenant un manchon fileté (19) pour l'assemblage avec une entrée de chaleur dans un composant fabriqué par un processus FDM (37) et un manchon de guidage (25) présentant une bobine thermique (27), dans lequel

- le manchon fileté (19) présente une rainure (15) le long de son axe longitudinal
- une surface orientée vers l'extérieur du manchon fileté (19) comprend un filetage autotaraudeur présentant des bords de coupe (17) et une surface orientée vers l'intérieur du manchon fileté (19) comprend un filetage métrique (21).

2. Kit selon la revendication 1 **caractérisé en ce que**

le filetage autotaraudeur est divisé en deux sections (2, 4) le long de l'axe longitudinal du manchon fileté, dans lequel une première section (2) comprend un diamètre de pas (3) constant et une seconde section comprend un diamètre de pas décroissant le long de son axe longitudinal et dans lequel le diamètre de pas (3) maximal du filetage autotaraudeur est conçu au niveau de sa première section (2).

3. Kit selon les revendications 1 à 2 **caractérisé en ce que**

le manchon fileté (19) comprend un matériau ferromagnétique et/ou plusieurs rainures (15) le long de son axe longitudinal et/ou une douille à six pans creux (23) et/ou une douille torx.

4. Système conçu pour assembler un manchon fileté (19) avec une entrée de chaleur dans un composant fabriqué par un processus FDM (37), comprenant :

- un kit selon l'une quelconque des revendications 1 à 3
- un composant fabriqué par un processus FDM (37)
**caractérisé en ce que**
- le diamètre intérieur du manchon de guidage (25) est aligné radialement avec le diamètre de pas du filetage autotaraudeur (3) du manchon fileté (19), de sorte que le manchon fileté (19) est guidé dans le manchon de guidage (25)
- le manchon de guidage (25) est partiellement entouré d'une source de chaleur.

5. Système selon la revendication 4
**caractérisé en ce que**
le composant fabriqué par un processus FDM (37) présente un trou central (35), dans lequel le manchon de guidage (25) est aligné radialement sur le trou central (35).

6. Système selon la revendication 4 et/ou 5
**caractérisé en ce que**

le manchon de guidage (19) présente une fermeture (31) et une couche d'isolation (33), dans lequel la fermeture (31) peut se déplacer selon un degré de liberté à travers une ouverture de manchon de guidage (25) disposée latéralement et dans lequel la couche d'isolation (33) divise le manchon de guidage (25) le long de son axe longitudinal en une zone disposée au-dessus de la couche d'isolation (33) et une zone située au-dessous de la couche d'isolation (33) dans lequel la fermeture (31) est située dans la zone au-dessus de la couche d'isolation (33).

7. Système selon l'une quelconque des revendications 4 à 6
**caractérisé en ce que**
la source de chaleur est une bobine (27) placée autour du manchon de guidage (25) et seule la zone disposée au-dessus de la couche d'isolation (33) est entourée de la bobine (27).

8. Système selon l'une quelconque des revendications 4 à 7,
**caractérisé en ce que**
le manchon de guidage (25) est conçu pour recevoir le manchon fileté (19) dans une ouverture disposée dans la zone supérieure, pour la chauffer et pour déplacer la fermeture (31) dans une position ouverte après avoir atteint une température cible, de sorte que le manchon fileté (19) est guidé dans la zone située au-dessous de la couche d'isolation (33) et peut être vissé dans le composant fabriqué par le processus FDM (37) au moyen d'un outil d'application de couple.

9. Système selon l'une quelconque des revendications 4 à 8,
**caractérisé en ce que**
l'outil d'application de couple présente un capteur qui est conçu pour surveiller un paramètre sélectionné dans un groupe constitué de la température, de l'entrée de chaleur, du couple, de la pression, de la vitesse d'avance et/ou de la vitesse de rotation.

10. Procédé d'assemblage d'un manchon fileté (19) avec une entrée de chaleur dans un composant fabriqué par un processus FDM (37), avec un système selon les revendications 4 à 9
**caractérisé en ce que**

a) le manchon fileté (19) est chauffé à une température cible
b) le manchon fileté (19) est vissé dans un composant fabriqué par un processus FDM (37) à l'aide d'un outil d'application de couple, dans lequel le manchon fileté (19) est guidé.

11. Procédé selon la revendication 10
**caractérisé en ce que**

- l'étape a) est précédée de :

a1) un manchon de guidage (25) est aligné sur un composant fabriqué par un processus FDM (37)
a2) le manchon fileté (19) est inséré dans le manchon de guidage (25)
a3) le manchon fileté (19) est guidé sur une fermeture (31) présente à l'intérieur du manchon de guidage (19)

- les étapes suivantes se situent entre les étapes a) et b) :

b1) la fermeture (31) est déplacée dans une position ouverte
b2) le manchon fileté (19) est guidé dans une seconde zone du manchon de guidage (25)
b3) l'outil d'application de couple est inséré à travers une ouverture supérieure du manchon de guidage (25) et repose sur le manchon fileté (19).

**12.** Procédé selon les revendications 10 à 11 **caractérisé en ce que** l'outil d'application de couple présente un capteur qui est conçu pour surveiller un paramètre sélectionné dans un groupe constitué de la température, de l'entrée de chaleur, du couple, de la pression, de la vitesse d'avance et/ou de la vitesse de rotation.

**13.** Procédé selon l'une quelconque des revendications 10 à 12, **caractérisé en ce que** l'outil d'application de couple, en tenant compte du paramètre surveillé, visse le manchon fileté (19) dans le composant fabriqué par un processus FDM (37).

**14.** Utilisation d'un kit selon l'une des quelconque revendications 1 à 3 pour assembler un manchon fileté (19) avec une entrée de chaleur dans un composant fabriqué par un processus FDM (37), dans laquelle le manchon fileté (19) comprend une surface orientée vers l'extérieur avec un filetage autotaraudeur présentant des bords de coupe (17) et une surface orientée vers l'intérieur avec un filetage métrique (21).

**Figure 1**

**Figure 2**

Figure 3

**EP 3 913 238 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0109528 A1
- DE 19705172 C1